# EUROPEAN PATENT APPLICATION

(11) **EP 1 301 027 A1**
(43) Date of publication of application: **09.04.2003**
(21) Application number: 01123883.9
(22) Date of filing: 05.10.2001
(51) Int. Cl.: H04N 3/15, H04N 1/04

(54) **Method and device for improved image resolution or image comparison using high speed parallel processing**

(71) Applicant: Abscondenda AB, 417 64 Göteborg (SE)
(72) Inventor: Kinnander, Per, 115 53 Stockholm (SE); Kinnander, Folke, 115 53 Stockholm (SE)
(74) Representative: Lindberg, Klas Valter Bo

(57) **Abstract**

The invention relates to a method and an apparatus for producing and analysing high-resolution information based on a limited number of sensors in an array such that the final resolution of the data is higher than that determined by the spacing of the sensors in the array (superresolution). By moving the input data as produced for example by an optical lens system relative to the sensor array in a particular way a series of patterns is generated such that they have a well-defined relationship to each other. The patterns are then combined and analysed component by component producing a high resolution output data stream.

## Description

### Field of the invention

The present invention relates to a method and an apparatus for generating a superresolved two dimensional data representation of an image, wherein the image is projected on a two dimensional array of cells, each cell comprising at least one sensor, and wherein a first set of input image data is received from the array of cells. More specifically, the present invention concerns an improved superresolution method that can be applied to images of many different sorts, for instance acoustical images, electron scanning images, data flow images and the like. The method according to the invention includes a programmable data analysis technique employing high speed parallel computation. In particular, a preferred embodiment of the invention includes the use of a cellular neural network as realised on a semiconductor chip. The invention also relates to a method and apparatus for image comparison.

### Background of the invention

Image data may often be incomplete, defective or noisy and therefore it can be difficult to extract information from it. For example, the data may be in the form of an optical image or a document of some kind. In general the resolution of such an image detection scheme or document scanner is limited by the spacing of the individual sensors making up the sensor array used to detect the input image. However, means known as superresolution methods have been developed for combining two or more pixel versions of an image in such a way that the resolution of the resulting image is higher than any of the original pixel versions of that image. This technique can be applied in one, two or more spatial dimensions.

Images of various sorts, for example photographic images, are often scanned in order to transform the data they contain, for instance in the form of black and white dots, to electronic signals, either analogue or digital. This technology is used in cameras, copiers, document scanners and many other types of electronic equipment. It is often important to produce electronic results with high resolution in a short time.

The most straightforward way of scanning an image is to arrange a line of sensors to detect signals from the input image as it is moved perpendicular to the sensor line. Then data from the image is read by the sensor array and converted to an electronic signal which can be analysed, filtered or otherwise treated before being reassembled to produce a new or reconstructed image. In its simplest form one small area of the image is read by each sensor at a time, a one-to-one mapping. The result is an analogue or digital electrical signal whose strength is a measure of the signal intensity. The resolution of the procedure is often determined by the size and spacing of the sensor elements. In many applications it is not possible to reduce the size and spacing of the sensor elements sufficiently to achieve the desired resolution. In other cases the cost of the miniaturised sensors and their large numbers make the resulting design unattractive.

A method of circumventing some of these difficulties has recently been presented in EP 0 998 114. Here multiplexing, i.e. several processes sharing a single resource, between document pixels and sensor elements has been applied in order to reduce the number of sensor elements needed. Data from sequential readings of a limited number of neighbouring document pixels are detected by a single sensor element and stored. When reproducing the image electronically they are combined to give an image with as many pixels as the original image but using fewer sensor elements. The resulting resolution is better than that corresponding to the size and spacing of the sensor elements, for which reason this is known as superresolution. The image can be said to be superresolved. This is achieved by turning the signals from the document pixels to each sensor element on and off in a certain sequence (that is, giving them distinguishable labels) by any one of a variety of means including a rotating rod lens, liquid crystal shutters or an appropriately patterned translatable flat plate. The labelling procedure, in this case based on sequential time intervals, makes it possible to reassemble the data. The method obviously decreases the number of sensor elements necessary to achieve a given desired resolution, thus reducing production cost and component size.

However, this multiplexing superresolution technique has several disadvantages stemming primarily from the fact that the degree of multiplexing is determined by hardware that once manufactured cannot be adjusted to increased degrees of multiplexing. Thus the superresolution that can be achieved is both determined by the hardware chosen, such as the hard wiring, and limited by how it is implemented (built in). If two image pixels are read by a single sensor element the degree of superresolution is at most two. Once implemented, this cannot be increased, although it can be decreased, for instance by combining the signals from two or more pixels during a given time interval. This may be necessary in order to reduce scanning times, for instance.

Further problems of the prior art superresolution solutions are that the achievable resolution is limited. Still further, the cost involved in improving the resolution grows rapidly when the resolution is increased.

Similar problems are present in the areas of image comparison, such as in image classification, image change detection, image identification, and the like.

### Summary of the invention

It is therefore an object of the present invention to provide a method and an apparatus for improved image resolution.

This object is achieved with the method and the apparatus according to the appended claims.

According to a first aspect of the invention, it relates to a method for generating a superresolved two dimensional data representation of an image, comprising the steps of: projecting the image on a two dimensional array of cells, each cell comprising at least one sensor; and receiving a first set of input image data from the array of cells. Further, it comprises the steps of: displacing the projected image relative to the array of cells to at least one other position; receiving at least one further set of input image data from the array of cells in said at least one other reception position; and calculating a superresolved two dimensional data representation of the image based on said different sets of input data.

In the context of this application, the word pixel is used to define a picture element, a usually the smallest non-divisible element of a digital image. Further, image is used as meaning any two-dimensional array of data representing some kind of physical reality, such as data representing optical input values, acoustical input values, electromagnetic input values, etc. Projecting is used to define the process of transferring the two-dimensional image data to corresponding parts of the two-dimensional array of cells. Accordingly, the projection may be optical projection, but may also be acoustic projection, electric transfer of data, etc.

The disadvantages experienced in the prior art solutions are largely alleviated in this method by incorporating a degree of motion in the displaced sets of data. Hereby, multiplexing as well as the speed of scanning could be brought into the implementation so that the degree of superresolution can be varied as necessary.

Preferably, the sensors of the array of cells are spaced at characteristic distances along two different axes, and wherein the distance between any two neighbouring reception positions is less than the characteristic sensor spacing in that direction.

It is further preferred that the reception positions are arranged on a path forming at least part of an ellipse. The ellipse could either be oblong or circular. The elliptical path is preferably centred on one, preferably arbitrarily chosen, sensor, and the radii of the elliptical path preferably equals an integral number of centre to centre distances of the sensor array.

The displacement of the projected image relative to the array of cells could either be performed in an essentially continuous motion, or in an essentially stepwise motion. The displacement of the projected image relative to the array of cells could further be variable.

The present invention preferably makes use of the so-called cellular non-linear network or cellular neural network (CNN) paradigm, which could be realised in CNN stored program analogic computing arrays (CNN microprocessors), currently available as arrays of 64 x 64 elements (square lattice) and more manufactured on silicon chips using known VLSI techniques. CNN microprocessors are analogue and logical, non-linear, mainly locally connected processor arrays on multidimensional grids. In two dimensions planar arrays can be oblique, square, rectangular or hexagonal. The functions of these arrays are determined by the processors associated with each cell of the array and which perform computations on the incoming signals in a fully parallel way. The information (analogue and logical) associated with each cell is also stored locally in a memory that is accessed by the cell's processor. The programming and control of each cell, in particular each cell's processor, in the array is accomplished by a global programming unit. This means that the function of the CNN microprocessor is programmable rather than built in or hard wired. Since this arrangement is obviously well suited to processing optical images, in some CNN microprocessors one or more optical sensors are associated with each cell of the array. The optical sensors can be replaced by other microsensors, for instance acoustical or ultrasonic microphones or hydrophones, as appropriate. A CNN microprocessor can process the information it receives thousands of times faster (processing time of the order of a microsecond) than the human eye. These and other characteristics of CNN microprocessors are described in US 5 140 670, US 5 355 528 and US 5 717 834, said references hereby incorporated by reference.

The method could be used for producing and analysing high-resolution information based on a limited number of sensors in an array such that the final resolution of the data is higher than that determined by the spacing, the so called grain density, of the sensors in the array (superresolution). By moving the input data as produced for example by an optical lens system relative to the sensor array in a particular way a series of patterns is generated such that they have a well-defined relationship to each other. The patterns are then combined and analysed component by component producing a high resolution output data stream.

In the following the method according to the invention will be described in terms of its optical implementation using words such as picture, pixel, image, and the like, as well as words generally used in broader contexts such as resolution and pattern. However, the method according to the invention is not restricted to the optical domain and the input image can be any sort of data stream, as can the output data. Furthermore, the output data need not be presented in the same format as the input data. For instance, the output data can be a Fourier transform of the input data. Thus in particular in the following image refers to any sort of two (or more) dimensional data stream and picture refers to any sort of two or more dimensional representation of an object. Exposure refers not only to detecting light in a pixel for a given length of time, but to detecting incoming data of any sort over a given area during a given time.

In the pixel detection and analysis method according to the invention the input image is detected by a finite number of sensors in an array in such a way that the resolution of the data so obtained, for instance in the form of a reconstructed image, can be many times higher than that of the sensor array. The array is preferably a regular lattice, for instance a square or rectangular lattice, an oblique lattice or a hexagonal lattice. A hexagonal lattice must further not be uniform, but may alternatively be compressed in one or several directions, etc. The reconstructed image (or other representation of the information therein contained) can then be further analysed, for instance using a microprocessor, or stored. The high resolution is achieved by moving the incoming image in a controlled manner with respect to the sensor array, for example using continuous or stepped translational displacements in one or more directions. The translational displacements can be in the form of stepped sinusoids in the vertical and horizontal directions, for instance. This has the effect of moving the image in an elliptical pattern with respect to the sensor lattice. The nature of the relative motion can be adjusted within wide bounds by changing the amplitudes or the two displacements, the sizes of the steps and the time delay between the two displacements (their relative phases). Alternatively continuous motion can be combined with detection intervals of desired duration. If displacement ramps are used instead of sinusoids rectilinear relative motions can be obtained. Of course two or more different kinds of motion can be combined. In any case, the input image is detected and stored by the array cells a number of times during the motion or the motion cycle rather than only once.

The image and the sensor array can be moved relative to each other either by moving the image using lenses, prisms, and especially fluid prisms, deflectors or other means or by moving the sensor array using piezoelectric transducers, stepper motors, rotary actuators or the like.

During different intervals of the motion a pixel representation of the input image is generated and stored. Each of the pixel representations is shifted with respect to the previous one because of the relative motion of the input image and the sensor array. After several, or at least two, of these shifted pixel representations have been stored they are analysed to produce a reconstructed image (or other representation of the data) that is finer grained than the distance between neighbouring sensors in the sensor array. This is possible because each sensor or cell in the array is used several times, not just once, to develop the reconstructed image.

It is advantageous to realise the sensor array in the form of a space filling, repeatable structure, that is, an array with given, constant dimensions. Such structures are known as lattices. In two dimensions there are five different Bravais lattices belonging to four different systems: oblique (two-fold rotational symmetry), rectangular (two-fold rotational symmetry), square (four-fold rotational symmetry) and hexagonal (two-fold, three-fold and six-fold rotational symmetry). Rectangular and square lattices can be viewed as special cases of oblique lattices in which the angle between primitive cell vectors is 90°. Square lattices are rectangular lattices with equal length primitive cell vectors. In the following the term oblique will be used to refer to oblique, rectangular and square lattices as a group. The method according to the invention can be realised using any one of the different lattices, but as will be explained below it turns out that the hexagonal lattice offers particular advantages in this context. The relative motion of the image and the lattice then appropriately has an amplitude corresponding to a multiple of the size of the lattice.

This detection and analysis device is appropriately realised in the form of a microprocessor in which each cell is associated with a sensor and where the output from the sensor corresponds to a picture element, a pixel, where "picture" is used in its broadest possible sense. Further, each cell is equipped with an output device that can transmit data in the form of an analogue or digital signal in electrical, optical or other form or combination of forms to an external device or milieu. The cell array can detect, store and analyse the incoming image pixel by pixel before preparing the reconstructed image for output to an appropriate device or milieu. Together the outputs from the cells of the array comprise a reconstructed image or other representation of the data that can be transmitted to a storage medium or processed in some data handling device.

The cells of this array or lattice can be so connected that they receive information from neighbouring cells as well as from their own sensors. In particular, the cell array can be so constructed that it comprises a cellular neural network (CNN). When a cell receives information from its nearest neighbours only the radius of interaction, r, is one. When next nearest neighbours are also included r is two, and so on. For a square or rectangular or oblique lattice there are eight nearest neighbour cells while for a hexagonal lattice there are six nearest neighbour cells.

When the image has been detected during a given time interval each cell in the array collects detection data from its sensor and from each of its neighbour cells and stores it, either in a memory associated with the cell or in an external memory. In the case of r = 1 the data is collected from six or eight nearest neighbour cells as well as the cells own sensor. Then the image is shifted with respect to the array and detected again. This detection data is again collected from each neighbour cell and stored. The process is repeated until the motion cycle is complete, that is, until the image returns to its original position relative to the cell array. If necessary a second, different cycle can be performed, followed by a third different one, etc. While any given cell thus collects data from its neighbours corresponding to each time interval, its own sensor also supplies data to it that it stores and distributes to its neighbours. Again, if r = 1 only nearest neighbours are informed. Thus each cell acts as both a data collector and a data generator and distributor and in addition as a data transmitter to a memory, either a local one or a remote or external one.

The data from a number of shifted images as delivered to a memory, for instance an external optical memory, is then used to reconstruct an image with better resolution than would have been obtained with one exposure of the image to the cell array. As noted above, this is called superresolution. The method according to the present invention is carried out as follows.

According to a further aspect of the invention, it relates to a corresponding apparatus for generating a superresolved two dimensional data representation of an image, comprising a two dimensional array of cells, each cell comprising at least one sensor and projection means for projecting the image on the array of cells. The apparatus further comprises displacement means for displacing the projected image relative to the array of cells during reception of at least two sets of input image data from the array of cells in different relative reception positions, and calculation means for calculation of a superresolved two dimensional data representation of the image based on said different sets of input data.

According to still another aspect of the invention, it relates to a method for image comparison, comprising the steps of generating a two dimensional data representation of an image; and comparing the calculated image two dimensional data representation with at least one set of pre-stored image data. The step of generating the two dimensional data representation comprises the steps of: projecting the image on a two dimensional array of cells, each cell comprising at least one sensor; receiving a first set of input image data from the array of cells; displacing the projected image relative to the array of cells to at least one other position; receiving at least one further set of input image data from the array of cells in said at least one other reception position; and calculating an image two dimensional data representation of the image based on said different sets of input data. The pre-stored image data is preferably generated in the same way as the image two dimensional data representation, which facilitates the comparison, since the format and the resolution of the representations would then be the same.

Accordingly, in this method a resolved image data representation is generated essentially as in the previously discussed method.

The step of comparing the calculated image two dimensional data representation with at least one set of pre-stored image data could comprise identification of differences between said image representation and said pre-stored image data. Hereby, defects and the like could be easily identified by comparing with a model, original or the like. This could e.g. be used for production control, for image change detection and the like. In this case, the whole image need not be calculated, but only certain parts or certain aspects of the image may need to be considered. Preferably, the step of generating a image two dimensional data representation comprises receiving of sets of input data in several different reception positions of the projected image with respect to the array of cells, whereby said step of comparison is performed during the generation of the image for at least one intermediate image representation, and preferably continuously during the generation of the image representation. Hereby, the comparison could be made during the generation of the image, which reduces the computation time and the need for data storage capacity.

Alternatively, the step of comparing the calculated image two dimensional data representation with at least one set of pre-stored image data could comprise determination of the degree of correspondence between the data representation and the pre-stored image. This could be used for identification of one of several possible sets of pre-stored image. This could be used for image recognition, for personal identification by means of images, such as fingerprint identification or iris identification, and the like. It could also be used for classification and the like.

A final aspect of the invention relates to a corresponding apparatus for image comparison comprising means for generation of a two dimensional data representation of an image, and comparison means for comparing the calculated image two dimensional data representation with at least one set of pre-stored image data. The means for generation of a two dimensional data representation of an image comprises a two dimensional array of cells, each cell comprising at least one sensor, projection means for projecting the image on the array of cells, displacement means for displacing the projected image relative to the array of cells during reception of at least two sets of input image data from the array of cells in different relative reception positions, and calculation means for calculation of a two dimensional data representation of the image based on said different sets of input data.

Further scope of the applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief description of the drawings

For exemplifying purposes, the invention will be described in closer detail in the following with reference to embodiments thereof illustrated in the attached drawings, wherein:
Fig 1 is a schematic representation of an image processing system including an input image generator, an image detection and treatment device and an image storage device.
Fig. 2a shows a square lattice in which the columns are identified by index i and the rows by index j.
Fig. 2b shows a hexagonal lattice in which the columns are identified by index i and the rows by index j.
Fig. 3a - 3d show a small part of a square lattice in which a central cell is labelled 0 and its eight nearest neighbours are labelled 1 to 8 and in which an image being detected is indicated by hatching.
Fig. 4a - 4d show a small part of a hexagonal lattice in which a central cell is labelled 0 and its six nearest neighbours are labelled 1 to 6 and in which an image being detected is indicated by hatching.
Fig. 5 shows a hexagonal cell that has been stepped 36 times and the borders of the hexagons it has intersected marked, thus producing 54 small space filling triangles.
Fig. 6 shows a hexagonal cell with a one dimensional screen with variable sized battens to its left and the straight side of an object to the right such that the edge is at an angle in case 1 and essentially vertical in case 2.
Fig. 7 shows a hexagonal array of cells numbered so as to define which cells are included in r =1 and r = 2 (Fig. 7a) and in r =1, r = 2 and r = 3 (Fig. 7b) with respect to the origin cell 0.

### Description of preferred embodiments

In the following the method according to the invention will be described in terms of its optical implementation. It should be kept in mind that the method according to the invention is not restricted to the optical domain and the input image can be any sort of data stream, as can the output data. Furthermore, the output data need not be presented in the same format as the input data. Rather, it can be a Fourier transform or a wavelet transform of the input data, for instance.

Input image data could be optical data provided by cameras, optical systems etc. However, it may also be other types of data provided by e.g. sonar, electron microscopes, tomography equipment, radar, etc.

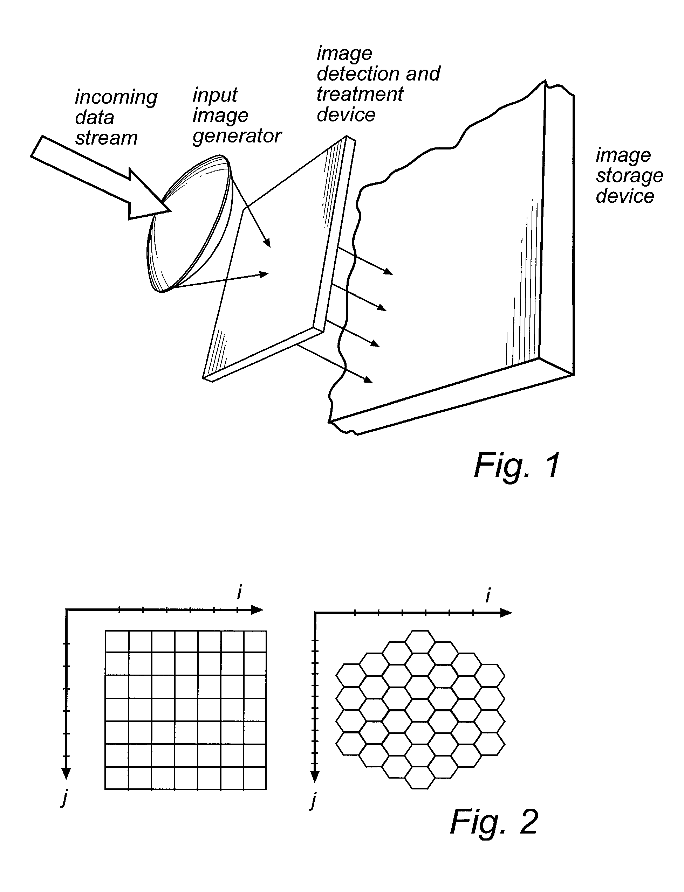

Fig. 1 is a schematic representation of an image processing system according to the invention showing its principle components. The input data stream impinges on the input image generator, typically a lens system, that forms an image on the surface of the image detection and treatment device. The latter detects the image, analyses and stores that image, prepares it for transmission to an image storage device and finally sends the information to that device.

The image detection and treatment device, preferably realised in the form of a CNN microprocessor, presents an array of sensors to the image plane of the input image generator. Two possible such sensor arrays are presented in Fig. 2a and 2b. The square sensor array in Fig. 2a is the most common arrangement. All present CNN microprocessors make use of this square array. Each cell in the array can be identified by the two indices i and j as shown. However, a hexagonal array as exemplified in Fig. 2b is used in the preferred embodiment of the present invention because it has certain data handling advantages as will be described below. However, the skilled man would appreciate that other array structures are feasible as well.

To understand the effect of moving an image in a pattern with respect to the cell array it is useful to begin by assuming that the image is a finite sized black spot much smaller than a cell. It can then be moved in the desired pattern and its intersection with different cells is studied. When and only when it intersects a given cell does that cell produce a signal. This procedure is repeated for all non-equivalent positions of the black spot. In the end this amounts to letting the image be a black spot of the size and shape of an array cell. Thus in the following the image is given the size and shape of a cell.

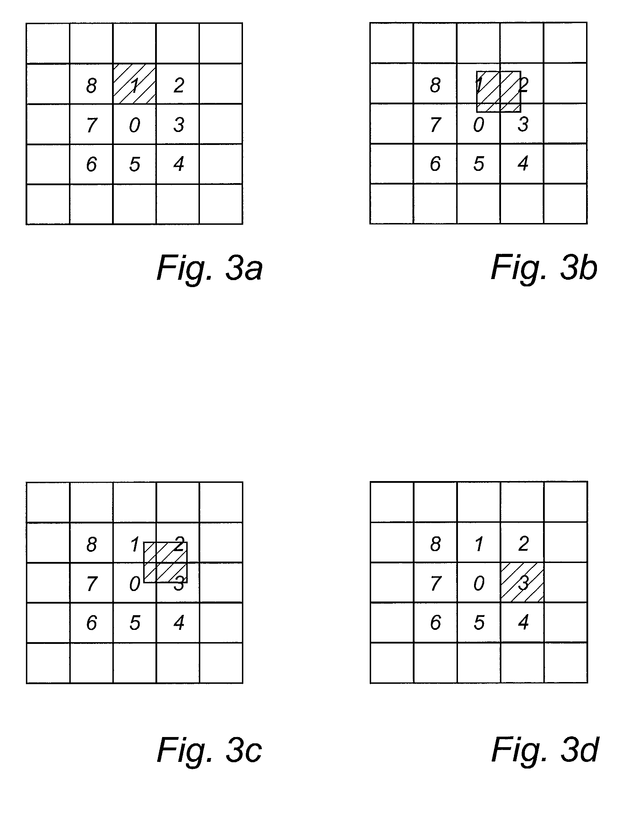

Fig. 3 shows a small part of a rectangular sensor array that is part of a CNN microprocessor. Any cell chosen at random can be denoted 0 and serve as an origin cell. Its eight nearest neighbours (r = 1) are then assigned numbers 1 to 8 as shown in the figure. An image indicated by hatched lines is projected onto this rectangular array. It is moved in an elliptical path (not rotated) of radii equal to the side lengths of a cell as indicated in Fig. 3b, 3c and 3d. In case the side lengths are equal and thus the two ellipse radii are also equal the path is a circle. During the quarter ellipse shown it intersects cells 1, 2 and 3 as well as the origin cell 0. During a whole ellipse it intersects all eight nearest neighbour cells. However, it is clear that at some times it intersects only cells 1, 3, 5 or 7 but it never intersects only cells 2, 4, 6 or 8. Thus in the square lattice, as in a rectangular or an oblique lattice, there are two distinctly different types of nearest neighbour cells. This distinction has to be maintained during the data analysis that involves letting the origin cell 0 gather information from each of its eight nearest neighbours.

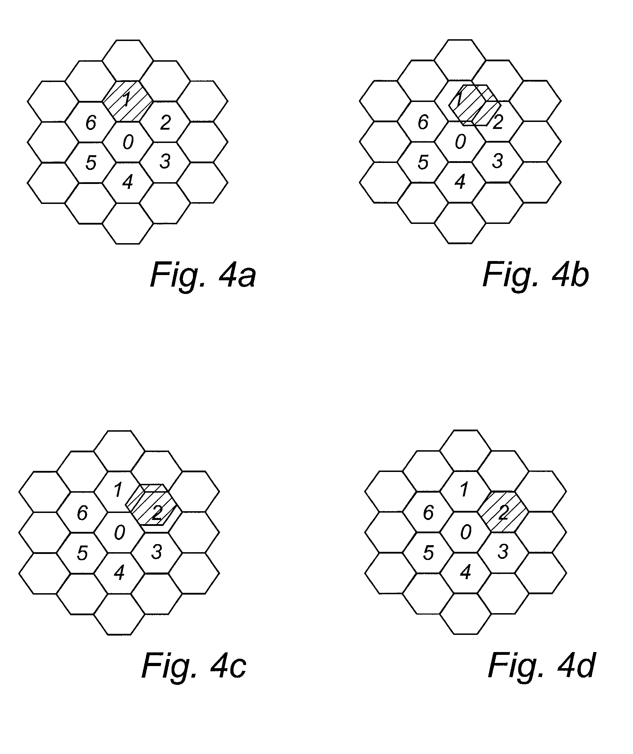

Fig. 4 shows a small part of a hexagonal sensor array that is part of a CNN microprocessor. In this figure the hexagons are equilateral, that is, all their sides and angles are equal, although this need not generally be true. Again any cell chosen at random can be denoted 0 and serve as an origin. Its six nearest neighbours (r = 1) are then assigned numbers 1 to 6 as shown in the figure. A hexagonal image indicated by hatched lines is projected onto this hexagonal array. It is moved in an elliptical path (not rotated) of radii equal to the distances between neighbouring cell centres as indicated in Fig. 4b, 4c and 4d. During the one sixth ellipse shown it intersects cells 1 and 2 as well as cell 0 and a cell outside the ring of first nearest neighbours. This latter can be ignored if the origin cell 0 collects data from its nearest neighbours only, a condition that can be relaxed as illustrated later. During a whole ellipse the image intersects all six nearest neighbour cells in exactly the same way.

From the above it should be clear that in terms of data treatment the hexagonal lattice is preferable to the square lattice and its relatives the rectangular lattice and the oblique lattice. A hexagonal lattice and elliptical relative motion will be analysed in the following.

Fig. 3 and 4 show four steps in the image translation procedure. The steps can be made as large or as small as desired. Typically there might be sixty steps for a complete 360° cycle. They can be realised using stepped motion or recording the image during distinct periods of time as the image is moved continuously with respect to the array. For simplicity, in the following reference will be made to stepped motion only.

After the image has been stepped to a new position all the sensors in the lattice detect the signal and transmit its value to their surrounding six origin cells. At the same time each origin cell receives these signals from each of its six surrounding nearest neighbour cells. Each origin cell stores the values of the signals for later analysis or transmission to an external memory. The signals from the neighbouring cells, i.e. cells 1 to 6, and the signal from the sensor of the cell, i.e. cell 0, need not be combined with equal weights. Rather, they can be combined with different individual weights, including negative weights and negative weights.

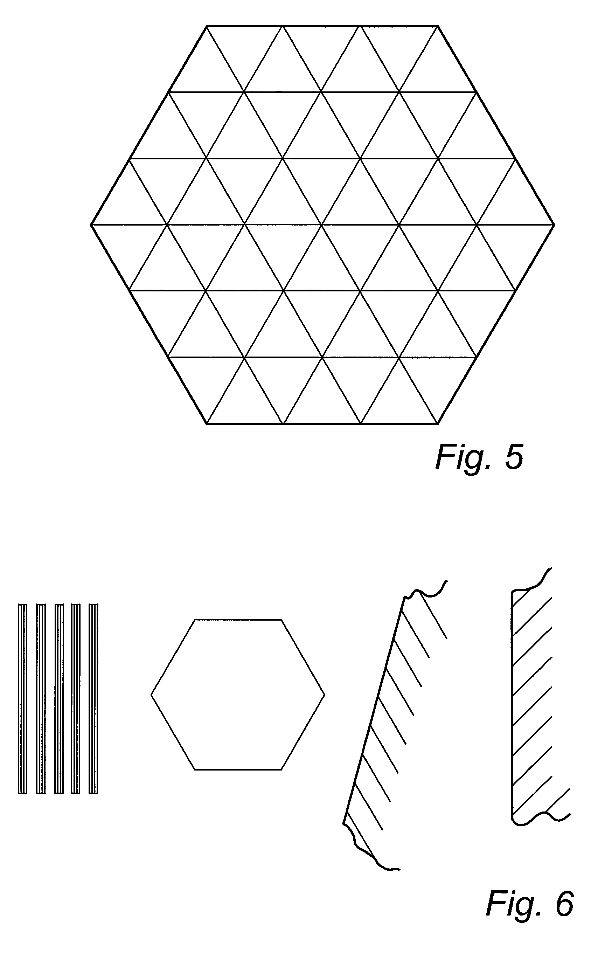

Consider an arbitrary cell i, j in the array after an arbitrary number of steps k. The cell's sensor measures the input signal strength and transmits its value to its neighbours. When step k + 1 is taken the cell's sensor again measures the input signal strength and again transmits it to its neighbours. The signal strength corresponding to k + 1 differs to that corresponding to k by the signal in the area along the leading edges of the cell that has been added and by the signal in the area along the trailing edges of the cell that has been deleted. The boundaries of the added and subtracted areas are straight lines parallel to the sides of the cell, as illustrated in Fig. 5. Thus the strips added and subtracted at each step of the motion are well defined and the change in the signal strength detected by the cell's sensor is directly related to them. Further, when all steps of a cycle have been completed not only all the differences can be determined, e.g. by combining the signals from neighbouring cells in different ways, but also the amounts added at the leading edges can be determined for each step as well as the amounts subtracted. In general it is not necessary to complete a cycle before this information can be developed since there are many different algorithms that can be applied to the data to extract the characteristics of an image being detected without the data or the cycle being complete.

This procedure makes it possible to assign to each strip a value related to the strength of the signal to be analysed. This is true for strips parallel to each of the three side directions of the hexagonal lattice (or both of the two side directions of a square, rectangular or oblique lattice). Therefore, in the end there will be sensor values for strips that intersect each other, from which the value of the signal in the intersection of the strips can be determined by any one of a number of known mathematical procedures. For the hexagonal lattice the elements that are finally formed after this procedure are small space filling triangles, as illustrated in Fig. 5. Here there are six steps per cell and 36 steps for a complete cycle. In each cell there are 54 small triangles according to Fig. 5. Each such small triangle can be assigned a value corresponding to the strength of the signal to be detected within the area of that triangle (or some other value based on that signal), which triangle is may times smaller than the array cell. If the degree of superresolution is defined as the ratio of y number of points to x number of cells then the degree of superresolution would be 54 in this case.

While the above procedure results in an arbitrarily high degree of superresolution (determined by the number of steps in a cycle), when it comes to using the data so produced to identify images or parts of images, here called objects, there is one weakness that must be overcome. Edges and corners are of great importance when defining objects. Corners present no problem in this context, but long straight edges do. A long straight edge slanting at any angle significantly different to the vertical, such as indicated by the edge labelled 1 in Fig. 6, can be detected and defined by the procedure above. However, when the edge is essentially parallel to the vertical, as illustrated by the edge labelled 2 in Fig. 6, its position and characteristics cannot be determined completely since it cuts cell strips in all three directions. For instance, an object consisting of small black or white cells cannot be differentiated from an object of the same size and shape coloured a grey that corresponds to the spatial average of the black and white cells. For the hexagonal lattice this vertical direction is the only blind direction. To determine the position of an essentially vertical edge it is necessary to introduce a screen in the form of a series of nearly vertical blinds or battens, as indicated to the left of the hexagon in Fig. 6. Then the position of the essentially vertical edge can be calculated to a precision determined by the distance between the battens.

The width and spacing of the battens need not be constant either in space or in time. A particularly convenient and useful way of varying the battens is to let their width grow and shrink by some appropriate amount at a rate also chosen to suit the conditions of the task at hand. For instance, the width might vary from essentially zero to wide enough that only a narrow strip centred between the battens is uncovered. The variation can be continuous or stepped and follow a sinusoidal pattern or any other convenient pattern, for instance a ramped one. The procedure might be likened to rotating physical battens in a Venetian blind. The rotation naturally modulates the size of the opening and thus the output signal from the cell. It can be used as a convenient label for this data stream. It might appropriately be five to twenty times the rate at which the array is stepped in its elliptical cycle.

For a square lattice there is not just one blind direction, but rather there are two blind directions corresponding to + 45° and - 45°. In this case two different screens are needed. They would need to be modulated at two different speeds in order to distinguish between their signals.

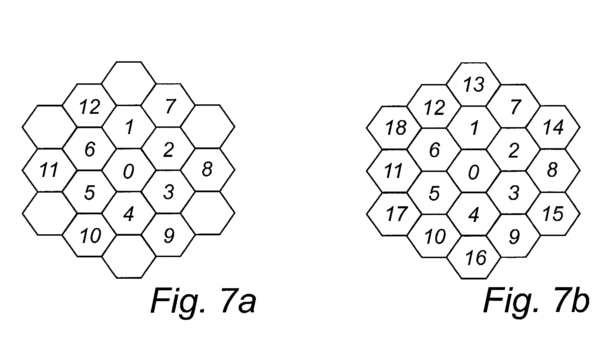

In the above the simplest form of a hexagonal implementation of the invention using only the six nearest neighbour cells (r = 1) has so far been considered. Extension of the radius of interaction to r = 2 and thus including cells 7 to 12 as shown in Fig. 7a has some interesting and useful consequences. In this case the origin cell, cell 0, still collects output information from its nearest neighbours, cells 1 to six, but each of those nearest neighbours, for instance cell 3, collects input signal strength information from five of its own nearest neighbours, that is, cells 0, 2, 4, 8 and 9, and transmits it to cell 0. These are the cells that intercept the signal hexagon that originally fit into cell 1 and which were eliminated from the analysis above because of the r = 1 restriction.

The signals from the five cells 0, 2, 4, 8 and 9 can be simply added in cell 3 or they can be combined in cell 3 with different weights, including negative weights and zero weights, before being transmitted to cell 0.

Of course it is possible to extend the radius of interaction to r = 3 including cells 13 to 18 as shown in Fig. 7b. This would include all six nearest neighbours of cell 3, for instance. Cell 0 can still collect information from its nearest neighbours, cells 1 to 6, but then each of these cells, for instance cell 2, collects input signal strength information from all six of its nearest neighbours, that is, cells 0, 1, 3, 7, 8 and 14. The information from each of the cells can be given an individual weighting, positive, negative or zero. For instance, giving cell 14 a weighting of zero makes the environment of cell 2 the same as it was for the case r = 2. In fact, all values of r are possible and can be made use of in the invention. It is also possible to combine the neighbourhoods of cells in various ways that are different for signal gathering and signal transmission.

Giving the individual cells in a group of cells different weights produces useful effects in image analysis, as has long been known especially in the case of square lattices. This is commonly referred to as image enhancement and is used to improve the appearance of an image or certain aspects of an image as needed. This includes image reduction and magnification as well as spatial filtering. Spatial filtering, as implemented in masks, for instance, can be low frequency or high frequency or produce linear or non-linear edge enhancement, for instance. Of especial interest here is edge and corner identification which can be carried out separately if desired. Spatial filtering can also be used to generate spatial Fourier transforms of images that contain all the information in the original image but packed or presented in another format. Masks for all these image treatments are well known for square lattices and in case they are not also known for hexagonal lattices they can be developed by giving cells in the array different weights when combining their signals as outlined above. The results can be used to repair images that have been damaged by noise in the incoming signals. For instance, a filter that identifies edges can be used to find edges partly buried under noise and then reconstruct the edges as they would appear without the noise overlay.

The technique of using spatial filtering as described above refers to weighting the contributions of whole cells in the array. The very same techniques can obviously be used in analysing the image detection results in their superresolved form, that is, when the information is fine grained compared to the size of the cells. Then the masks performing the different filtering operations are to be considered as being manipulated electronically at the level of the small triangles shown in Fig. 5. They might appropriately be based on the space filling triangular array illustrated in Fig. 5 and thus correspond to any spatial filter or mask already known in connection with square lattices. Of course new filter functions can also be developed for application here. It should also be noted that an image can be filtered, Fourier transformed and then filtered again before being inverse Fourier transformed if appropriate, that is, spatial filters can be applied before and after Fourier transformation.

The cycles described above, in which the image is moved with respect to the cell array through a complete closed circuit and in which the battens of the screen are made wider and narrower in a repeated manner, can be carried out at various speeds according to the circumstances. For instance, when the incoming signal is quite strong the cycle can be performed quickly with enough signal sensed during the smallest time interval to provide a dependable signal, that is, an acceptable signal to noise ratio. On the other hand, if the signal is weak it is better to run the cycle slowly in order to achieve an acceptable signal to noise ratio. At the same time the scale of the signal can be changed, either using a linear transformation or if appropriate a non-linear one. The system can be so designed as to adapt itself to its present situation automatically according to some pre-set instructions. This adaptation is significantly facilitated in the present case of an array of cells processing information in parallel compared to more conventional configurations in which sensor data is processed serially. The cycle rate could e.g. be varied in dependence of the required contrast.

Also because of the power of parallel computation as exemplified by the array of cells it is possible to identify areas of the image that carry little or no information, so-called white areas. An example might be blue sky surrounding an aircraft in which it is the aircraft that is of interest rather than the relatively uniform blue sky. Having identified these white areas they can be eliminated from further analysis in a number of ways including reducing the size of the field including the image of interest or turning off the signals describing the white area.

The above description of the present invention is for the purpose of explanation and illustration. Many other embodiments of the invention are possible. For example, different types of images may be used, the sets of input data may be received in different ways, different alternative displacement solutions are feasible, etc. Thus the invention is not limited by the above, but can be varied within the frame of the principles outlined, as would be apparent for some one skilled in the art. The appended claims should be construed to include alternative embodiments of the invention within the frame of the principles given and further limited only by the prior art.

## Claims

1. A method for generating a superresolved two dimensional data representation of an image, comprising the steps of:
projecting the image on a two dimensional array of cells, each cell comprising at least one sensor; and
receiving a first set of input image data from the array of cells;
**characterised in that** it further comprises the steps of:
displacing the projected image relative to the array of cells to at least one other position;
receiving at least one further set of input image data from the array of cells in said at least one other reception position; and
calculating a superresolved two dimensional data representation of the image based on said different sets of input data.

2. A method for image comparison, comprising the steps of:
generating a two dimensional data representation of an image; and
comparing the calculated image two dimensional data representation with at least one set of pre-stored image data,
wherein the step of generating a two dimensional data representation comprises the steps of:
projecting the image on a two dimensional array of cells, each cell comprising at least one sensor; and
receiving a first set of input image data from the array of cells;
**characterised in that** it further comprises the steps of:
displacing the projected image relative to the array of cells to at least one other position;
receiving at least one further set of input image data from the array of cells in said at least one other reception position; and
calculating an image two dimensional data representation of the image based on said different sets of input data.

3. The method of claim 1 or 2, wherein the displacement is parallel, i.e. without rotation of the image.

4. The method of claim 1, 2 or 3, wherein the sensors of the array of cells are spaced at characteristic distances along two different axes, and wherein the distance between any two neighbouring reception positions is less than the characteristic sensor spacing in that direction.

5. The method of any one of the preceding claims, wherein the reception positions are arranged on a path forming at least part of an ellipse.

6. The method of claim 5, wherein the elliptical path is centred on one, preferably arbitrarily chosen, sensor.

7. The method of claim 5 or 6, wherein the radii of the elliptical paths equal integral numbers of centre to centre distances of the sensor array.

8. The method of any one of the preceding claims, wherein the sensors of the sensor array are arranged in a hexagonal pattern.

9. The method of claim 8, wherein a screen with essentially parallel battens is provided to cover at least a part of the sensor array, the battens being oriented essentially perpendicular to a vector crossing a sensor cell from one point of a hexagon to another.

10. The method of claim 9, wherein the widths of the battens in the screen are variable both in amplitude and in rate of variation.

11. The method of any one of the preceding claims, wherein the displacement of the projected image relative to the array of cells is performed in an essentially continuous motion.

12. The method of any one of the preceding claims, wherein the displacement of the projected image relative to the array of cells is performed in an essentially stepwise motion.

13. The method of any one of the preceding claims, wherein the displacement of the projected image relative to the array of cells is variable.

14. The method of any one of the preceding claims, wherein image input data is received in at least six different reception positions of the projected image with respect to the array of cells, and preferably about sixty different reception positions.

15. The method of any one of the preceding claims, wherein the calculation step is performed in parallel for several cells simultaneously, and preferably for essentially all cells.

16. The method of claim 15, wherein the calculation step is based on sensor data from at least one neighbouring cell.

17. The method of any one of the preceding claims as dependent on claim 2, wherein the step of comparing the calculated image two dimensional data representation with at least one set of pre-stored image data comprises identification of differences between said image representation and said pre-stored image data.

18. The method of claim 17, wherein the step of generating a image two dimensional data representation comprises receiving of sets of input data in several different reception positions of the projected image with respect to the array of cells, whereby said step of comparison is performed during the generation of the image for at least one intermediate image representation, and preferably continuously during the generation of the image representation.

19. The method of any one of the claims 2-16 as dependent on claim 2, wherein the step of comparing the calculated image two dimensional data representation with at least one set of pre-stored image data comprises determination of the degree of correspondence between the data representation and the pre-stored image.

20. The method of claim 19, wherein the calculated image two dimensional data representation is compared with several sets of pre-stored image data, wherein sets of pre-stored image data with at least a minimum degree of correspondence, and preferably an exact match, is identified.

21. The method of any one of the preceding claims as dependent on claim 2, wherein the at least one set of pre-stored image data is generated in the same way as the image two dimensional data representation.

22. An apparatus for generating a superresolved two dimensional data representation of an image, comprising a two dimensional array of cells, each cell comprising at least one sensor and projection means for projecting the image on the array of cells, **characterised in that** it further comprises displacement means for displacing the projected image relative to the array of cells during reception of at least two sets of input image data from the array of cells in different relative reception positions, and calculation means for calculation of a superresolved two dimensional data representation of the image based on said different sets of input data.

23. An apparatus for image comparison comprising means for generation of a two dimensional data representation of an image, and comparison means for comparing the calculated image two dimensional data representation with at least one set of pre-stored image data, wherein the means for generation of a two dimensional data representation of an image comprises a two dimensional array of cells, each cell comprising at least one sensor and projection means for projecting the image on the array of cells, **characterised in that** said means further comprises displacement means for displacing the projected image relative to the array of cells during reception of at least two sets of input image data from the array of cells in different relative reception positions, and calculation means for calculation of a two dimensional data representation of the image based on said different sets of input data.

24. The apparatus of claim 22 or 23, wherein the means for displacement is adapted to perform a parallel displacement, i.e. a displacement without rotation of the image.

25. The apparatus of claim 22, 23 or 24, wherein the sensors of the array of cells are spaced at characteristic distances along two different axes, and wherein the distance between any two neighbouring displaced positions is less than the characteristic sensor spacing in that direction.

26. The apparatus of any one of the claims 22-25, wherein the displacement means are arranged to provide reception positions arranged on an at least partly elliptical path.

27. The apparatus of any one of the claims 22-26, wherein the sensors of the sensor array are arranged in a hexagonal pattern.

28. The apparatus of claim 27, further comprising a screen with essentially parallel battens arranged to cover at least a part of the sensor array, the battens being oriented essentially perpendicular to a vector crossing a sensor cell from one point of a hexagon to another.

29. The apparatus of claim 27 or 28, wherein hexagonal cells of the array are such that all six sides of the hexagon are essentially equally long and all six angles between the sides are essentially equally large.

30. The apparatus of any one of the claims 22-29, wherein the sensor array and the calculation means are integrated in a programmable cellular neural or non-linear network (CNN) device.

31. The apparatus of any one of the claims 22-30, wherein the displacement means is arranged to move the projected image.

32. The apparatus of claim 31, wherein the displacement means comprises at least one rotatable lens, and preferably a non-uniform lens, and most preferably a non-uniform cylindrical lens rotatable about the length axis.

33. The apparatus of any one of the claims 22-30, wherein the displacement means is arranged to move the array of cells.

34. The apparatus of claim 33, wherein the displacement means comprises piezoelectric actuators.

35. The apparatus of any on of the claims 22-34 as dependent on claim 23, wherein the means for comparing the calculated image two dimensional data representation with at least one set of pre-stored image data is adapted to identify differences between said image representation and said pre-stored image data.

36. The apparatus of claim 35, wherein the generation means is adapted to generate intermediate image two dimensional data representations after receiving sets of input data in at least two out of several different reception positions of the projected image with respect to the array of cells, whereby comparison means is adapted to perform the comparison for at least one intermediate data representation during the generation of the image, and preferably continuously during the generation of the image representation.

37. The apparatus of any one of the claims 22-34 as dependent on claim 23, wherein the comparison means is adapted to comparing the calculated image two dimensional data representation with at least one set of pre-stored image data, and to determine a degree of correspondence between the data representation and the pre-stored image.

38. The apparatus of claim 37, wherein the comparison means is adapted to compare the calculated image two dimensional data representation with several sets of pre-stored image data, wherein sets of pre-stored image data with at least a minimum degree of correspondence, and preferably an exact match, is identified.
